# EUROPÄISCHE PATENTSCHRIFT

(11) **EP 3 714 177 B1**
(45) Veröffentlichungstag und Bekanntmachung des Hinweises auf die Patenterteilung: **25.10.2023**
(21) Anmeldenummer: 18818976.5
(22) Anmeldetag: 23.11.2018
(51) Int. Cl.: F16D 1/108

(54) **VORRICHTUNG MIT DREHFESTER VERBINDUNG**
DEVICE WITH A ROTATIONALLY SECURED CONNECTION
DISPOSITIF AVEC UNE CONNEXION FERME CONTRE LA ROTATION

(30) Priorität: 23.11.2017 DE 102017010844
(43) Veröffentlichungstag der Anmeldung: 30.09.2020
(73) Patentinhaber: GRAMMER AG, 92289 Ursensollen (DE)
(72) Erfinder: RÖMER, Michael, 90518 Altdorf (DE); HOHL, Ulrich, 74080 Heilbronn (DE)
(74) Vertreter: Roche, von Westernhagen & Ehresmann
(86) Internationale Anmeldenummer: PCT/DE2018/000344
(87) Internationale Veröffentlichungsnummer: WO 2019/101257

(56) Entgegenhaltungen:
- WO-A1-2006/010501
- CN-A- 107 061 522
- DE-A1-102012 202 699
- US-A1- 2007 068 764

## Beschreibung

Die Erfindung betrifft eine Vorrichtung mit einer drehfesten Verbindung, insbesondere einer verschiebe- und drehfesten Verbindung.

Eine solche Vorrichtung umfasst ein erstes Bauteil und ein zweites Bauteil. Das erste Bauteil weist eine zylindrische Außenfläche und das zweite Bauteil eine zylindrische Innenfläche auf, in welcher die Außenfläche, eine drehfeste Verbindung bildend, koaxial zu einer Längsmittelachse der Innenfläche angeordnet ist, wobei die Außenfläche und die Innenfläche zusammenwirkende Verbindungsflächen bilden.

Eine solche Vorrichtung ist aus der DE 20 2012 111 124 B3 bekannt. Bei dieser Vorrichtung wird eine Kurbelwelle aus Teilen gefügt. Kurbelzapfen weisen Befestigungsabschnitte mit sich in Längsrichtung erstreckenden Zähnen auf, wobei der Befestigungsabschnitt in eine Aufnahmeöffnung einer Kurbelwange eingepresst wird. Der Querschnitt der Befestigungsabschnitte geht bereichsweise über den Innenquerschnitt der zugeordneten Aufnahmeöffnung hinaus.

Die DE 10 2010 048 674 A1 beschreibt ein Achswellenrad, welches zwischen einem Verzahnungsteil und einem Nabenteil eine form-, kraft- oder stoffschlüssige Verbindung aufweist. Die Verbindung kann z.B. von einer Pressverbindung, von einer Unrundheit der Aussparung des Verzahnungsteils und des komplementären Nabenteils oder von einer Steckverzahnung gebildet sein.

Die CN 107061 522 betrifft eine Welle - Nabe - Verbindung. In Absatz 5 ist erwähnt, dass es bei der Verbindung der Komponenten leicht passieren kann, dass Rippen einer Komponente einer Einstecköffnung benachbarten Seitenwänden der anderen Komponente gegenüber stehen. Die Verbindung der Komponenten ist daher schwierig. Mit anderen Worten, das Problem dieser Erfindung besteht darin, die Verbindungsschwierigkeiten, die in dem Fall auftreten, dass die komplementären Strukturen nicht in einer Relativposition zueinander stehen, in welcher sie in Eingriff bringbar sind, zu beseitigen.

In der Lösung ist angegeben, dass das Ende der Rippe und / oder das Ende der komplementären Vertiefung mit einer schrägen Struktur versehen ist, welche die Rippen in Eingriff mit den Vertiefungen führt. Auf diese Weise wird das Verbinden von Welle und Nabe vereinfacht

Aufgabe der WO 2006 / 010 501 A1 ist es eine Gelenkverbindung zwischen einem ersten Bauteil und einem zweiten Bauteil herzustellen, die eine Kraftübertragung bei hoher axialer Sicherung der Bauteile zueinander ermöglicht. Ein Bauteil weist eine Innenverzahnung und das andere eine Außenverzahnung auf, die als Geradverzahnung ausgebildet ist. Ein Teil der Verzahnung weist eine definierte Ungleichmäßigkeit gegenüber dem übrigen Teil der Verzahnung auf. Aufgrund dieses Merkmals wird eine Kraft zur Vermeidung einer Relativbewegung zwischen den Bauteilen erzeugt.

Insbesondere bei Verbindungspartnern mit unterschiedlichen Ausdehnungskoeffizienten, tritt das Problem auf, dass bei ungünstigen Temperaturverhältnissen sich der Außendurchmesser des Zapfens so stark ausdehnt, dass das mit der Aussparung versehene Teil zerstört wird oder aber, dass sich der Innendurchmesser der Aussparung soweit ausdehnt, dass das Spiel zwischen dem ersten und dem zweiten Teil so groß wird, dass eine sichere Bewegungsübertragung nicht gewährleistet ist.

Es war Aufgabe der Erfindung eine Vorrichtung mit einer drehfesten Verbindung zu schaffen, bei welcher sowohl die Gefahr der Materialüberlastung aufgrund unterschiedlicher Materialausdehnung als auch die Gefahr mangelnder Kraftübertragung zwischen dem ersten Bauteil und dem zweiten Bauteil gemindert ist.

Die Aufgabe wurde gelöst durch eine Vorrichtung mit den Merkmalen des Anspruchs 1.

Die Außenfläche oder die Innenfläche bildet eine Halteverzahnung, deren Zahnflanken z.B. axial, d.h. parallel zu der Längsmittelachse verlaufen und die andere der Verbindungsflächen bildet auf dem Umfang verteilte, voneinander beabstandete Längsvorsprünge. Die Längsvorsprünge erstrecken sich z.B. in eine Richtung parallel zu der Längsmittelachse der Bauteile. Wenigstens ein Bauteil ist z.B. rotationssymmetrisch geformt. Z.B. bildet das die zylindrische Außenfläche aufweisende Bauteil die Halteverzahnung aus und wirkt mit Längsvorsprüngen zusammen, die an dem Bauteil ausgebildet sind, welches die zylindrische Innenfläche aufweist. Gemäß einer alternativen Ausführung sind die Halteverzahnung an der Außenfläche und die Längsvorsprünge an der Innenfläche angeordnet.

Die Längsvorsprünge weisen eine größere Härte auf, als die Halteverzahnung. Entsprechend der radialen maßlichen Überdeckung bezogen auf die Längsmittelachse wird bei der Montage das weichere Material der Halteverzahnung von dem härteren Material verformt.

Die Längsvorsprünge erstrecken sich in Bezug auf Zähne der Verzahnung über eine geringere Länge. Auf diese Weise können die Längsvorsprünge das angrenzende Material der Verzahnung verformen, so dass sich angrenzend an die Längsvorsprünge Materialwulste des Materials der Verzahnung bilden, wodurch eine Relativbewegung zwischen den beiden Bauteilen sowohl in rotatorischer Richtung, als auch in axialer Richtung verhindert wird. Insbesondere, wenn die Verzahnung aus Kunststoff gebildet ist, bilden sich Setzmarken.

Gemäß einer Ausführungsform sind auf dem Umfang verteilte, voneinander beabstandete Quervorsprünge ausgebildet, die sich sowohl radial, als auch in Umfangsrichtung erstrecken und eine axiale Relativbewegung der Teile verhindern. Die axiale Erstreckung kann gering sein, z.B. zwischen 1 und 3 mm.

Eine Ausgestaltung der Erfindung ist dadurch gekennzeichnet, dass die Quervorsprünge eine größere Härte aufweisen, als die Halteverzahnung. Entsprechend der radialen maßlichen Überdeckung bezogen auf die Längsmittelachse wird bei der Montage das weichere Material der Halteverzahnung von dem härteren Material verformt.

Eine Ausgestaltung der Erfindung ist dadurch gekennzeichnet, dass die Halteverzahnung von einem Kunststoff gebildet ist. Der Kunststoff kann z.B. ein Polyoxymethylen (POM) sein.

Eine weitere Ausführungsform ist derart ausgestaltet, dass ein Fußkreisdurchmesser der Halteverzahnung kleiner ist als ein Kopfkreisdurchmesser der Längsvorsprünge und / oder der Quervorsprünge. Bei großer Ausdehnung des Materials durch Erwärmung, hat das Material dann noch genügend freien Raum, um sich radial zu verformen, insbesondere auszudehnen, und der Druck an der Laibung der Aussparung wird nicht so groß, dass eine Temperaturänderung zu einer Materialschädigung führen kann.

Der Quervorsprung ist z.B. endseitig von dem Längsvorsprung ausgebildet.

Der Längsvorsprung ordnet sich zwischen zwei Zahnflanken von benachbarten Zähnen der Verzahnung an. Eine Längsmittelachse jedes Längsvorsprungs ist dabei parallel zu den Längsmittelachsen der benachbarten Zähne angeordnet.

Weitere Vorteile der Erfindung ergeben sich anhand eines in den Fig. schematisch dargestellten Ausführungsbeispiels. Es zeigen:
Fig. 1 eine perspektivische Darstellung der Vorrichtung umfassend einer Spindelmutter sowie einen auf einer Außenfläche der Spindelmutter angeordneten Magnetring,
Fig. 2 eine Draufsicht auf die Vorrichtung gemäß Fig. 1,
Fig. 3 eine perspektivische Darstellung des Magnetrings der Vorrichtung,
Fig. 4 eine Draufsicht auf die Spindelmutter vor der Montage des Magnetrings,
Fig. 5 eine Schnittdarstellung gemäß Schnittlinie A - A in Fig. 2,
Fig. 6 eine Schnittdarstellung gemäß Schnittlinie B - B in Fig. 2.
Fig. 7 eine Draufsicht auf die Spindelmutter nach der Montage des Magnetrings,
Fig. 8 eine vergrößerte Ansicht gemäß Ausschnitt A in Fig. 7,

Die Vorrichtung insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

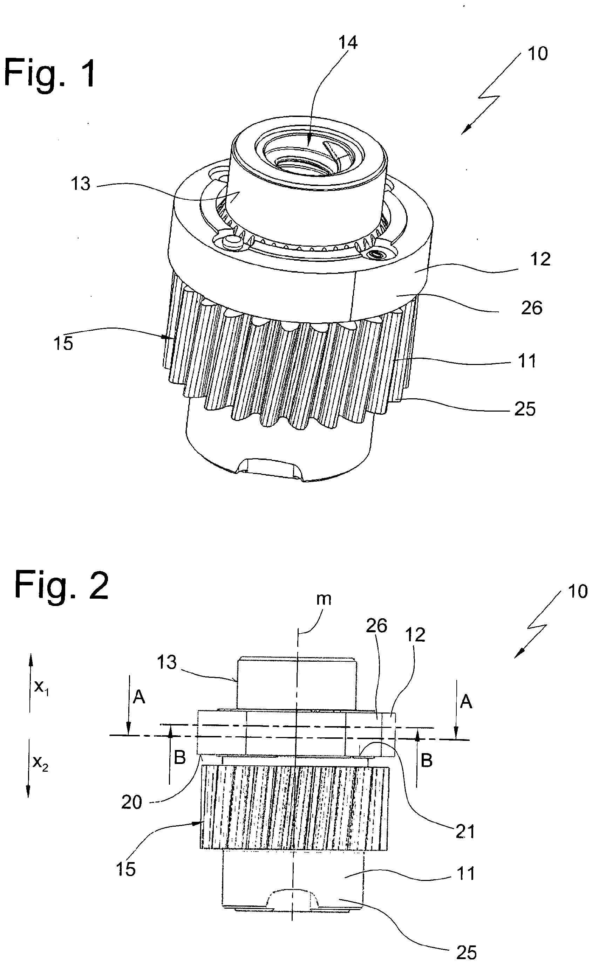

Die Vorrichtung 10 umfasst gemäß Fig. 1 ein erstes Bauteil 11 sowie ein zweites Bauteil 12. Das erste Bauteil 11 ist im vorliegenden Ausführungsbeispiel eine Spindelmutter 25 zum Antrieb einer Gewindespindel. Das zweite Bauteil 12 ist ein Magnetring 26. Die Spindelmutter 25 ist aus einem Kunststoff, in diesem Fall Polyoxymethylen und der Magnetring 26 ist aus einem Hartferrit hergestellt. Der Magnetring 26 ist koaxial zu einer Längsmittelachse m der Spindelmutter 25 auf einem verzahnten Bereich einer Außenfläche 13 der Spindelmutter 25 angeordnet.

Im Stand der Technik ergab sich das Problem, dass aufgrund der unterschiedlichen Ausdehnungskoeffizienten der Bauteile 11 und 12 die Ausdehnung der Spindelmutter 25 die des Magnetringes 26 überstieg, so dass es bei einer Temperaturänderung zum Platzen des Magnetrings 26 oder zur Ausbildung eines so großen Spiels kam, dass eine sichere Halterung des Magnetrings 26 nicht gewährleistet war. Z.B. in der Automobilindustrie ist aber eine sichere Funktion in einem Temperaturintervall von -40° bis 80° Celsius gefordert.

In Fig. 1 ist in einer durchgehenden koaxialen Aussparung ein Innengewinde 14 erkennbar, welches zum Antrieb der Gewindespindel vorgesehen ist. An der Außenfläche der Spindelmutter 25 ist eine Außenverzahnung 15 ausgebildet, über welche die Spindelmutter 25 von einem elektrischen Antrieb angetrieben wird. In der Draufsicht gemäß Fig. 2 sind Schnittlinien dargestellt, die senkrecht zu der Mittelachse m verlaufen. Die Spindelmutter 25 bildet eine Schulterfläche 21 aus. Eine Stirnfläche 20 des Magnetrings 26 liegt an der Schulterfläche 21 der Spindelmutter 25 an.

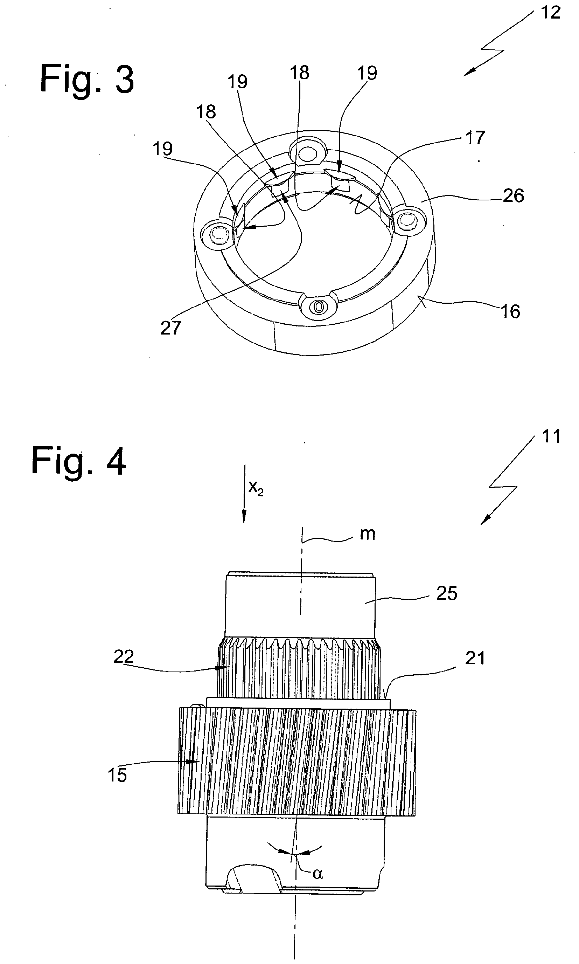

Fig. 3 ist eine perspektivische Darstellung des Magnetrings 26. Er ist kreiszylindrisch ausgebildet und weist eine koaxial zu einer Außenfläche 16 angeordnete Innenfläche 17 auf. An der Innenfläche 17 sind über den Umfang in gleichem Abstand verteilt 8 Längsvorsprünge 18 ausgebildet. An einem Ende jedes Längsvorsprungs 18 ist ein Quervorsprung 19 ausgebildet. Die Anzahl der Längsvorsprünge 18 und der Quervorsprünge 19 kann aber davon abweichen und je nach den Anforderungen gewählt werden.

Flanken des Längsvorsprungs 18 erstrecken sich parallel zu der Längsmittelachse m. Flanken des Quervorsprungs 19 erstrecken sich mit einer geringen Länge parallel zu der Längsmittelachse m. Mit anderen Worten, die Quervorsprünge 19 sind scheibenförmig ausgebildet. Die Quervorsprünge 19 ragen in Bezug auf die Längsvorsprünge 18 weiter radial in Richtung der Längsmittelachse m und erstrecken sich in Umfangsrichtung.

In Fig. 4 ist eine Draufsicht auf die Spindelmutter 25 dargestellt. Die Spindelmutter 25 umfasst einen Bereich, welcher mit der Außenverzahnung 15 versehen ist. Die Außenverzahnung 15, d.h. jede Zahnflanke der Außenverzahnung 15, bildet einen Winkel α zu der Längsmittelachse m. An die Schulterfläche 21, welche von einer Wellenschulter ausgebildet ist, grenzt eine Halteverzahnung 22 an. Die Zahnflanken der Halteverzahnung 22 erstrecken sich parallel zu der Längsmittelachse m.

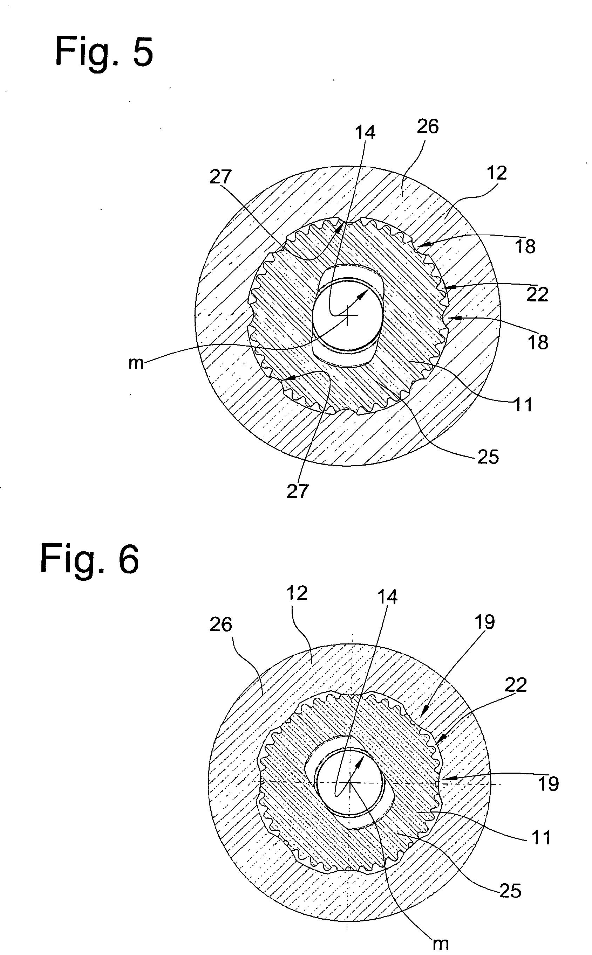

Fig. 5 zeigt die Schnittdarstellung entsprechend der Schnittlinie A - A, wobei durch die Längsvorsprünge 18 geschnitten wurde. In Fig. 5 ist zu erkennen, dass ein Kopf 27 jedes Längsvorsprungs 18 zwischen zwei benachbarten Zähnen der Halteverzahnung 22 angeordnet ist. Anders ausgedrückt Längsmittelachsen der Längsvorsprünge 18 sind zwischen Längsmittelachsen benachbarter Zähne der Halteverzahnung angeordnet. Ferner ist zu erkennen, dass ein Kopfkreisdurchmesser der Längsvorsprünge 18 bezogen auf die Längsmittelachse m größer ist als ein Fußkreisdurchmesser der Halteverzahnung 22.

In Fig. 6 ist ein Schnitt entsprechend der Schnittlinie B - B durch die Quervorsprünge 19 dargestellt. Auch ein Kopfkreisdurchmesser der Quervorsprünge 19 ist bezogen auf die Längsmittelachse m größer, als ein Fußkreisdurchmesser der Halteverzahnung 22. Aufgrund der Differenz zwischen dem Fußkreisdurchmesser und dem Kopfkreisdurchmesser der Längsvorsprünge 18 bzw. der Quervorsprünge 19 kann bei einer Temperaturänderung, beispielsweise bei einer Erwärmung, eine zusätzliche radiale Verformung der Halteverzahnung 22 in die Freiräume stattfinden. Damit wird verhindert, dass bei einer zu starken Dehnung der Spindelmutter 25 der Druck auf den Magnetring 26 so stark wird, dass dieser platzt.

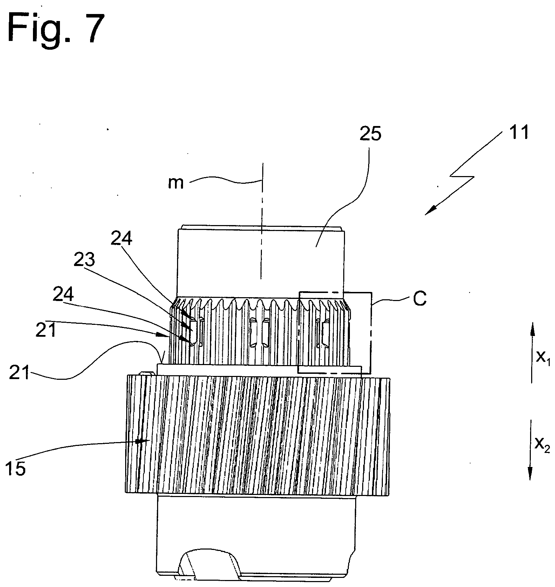

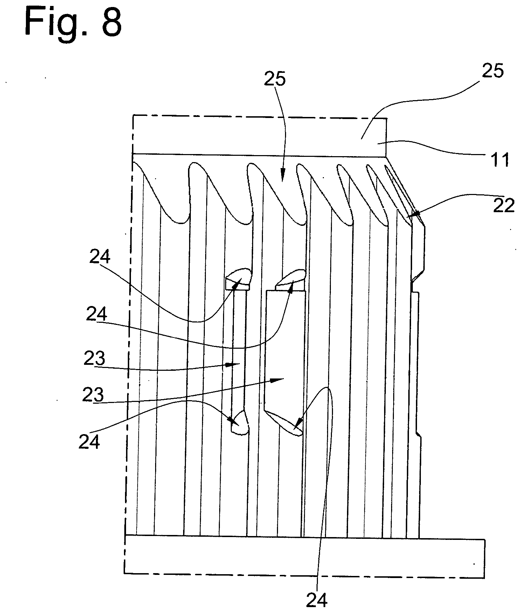

Da das Material des Magnetrings 26 härter ist als das Material der Spindelmutter 25 kommt es zu einem Setzen des Kunststoffmaterials, was in den Fig. 7 und 8 dargestellt ist, welche die Spindelmutter 25 ohne den Magnetring 26 zeigen. Es bilden sich Setzmarken 23 aufgrund der Verformung durch die Längsvorsprünge 18 sowie Setzmarken 24 aufgrund der Verformung durch die Quervorsprünge 19. Die Setzmarken 23 sind Widerlagerflächen, die derart ausgebildet sind, dass sie eine rotatorische Relativ-Bewegung zwischen dem Magnetring 26 und der Spindelmutter 25 um die Längsmittelachse m verhindern. Die Setzmarken 24 sind Widerlagerflächen, die eine Relativbewegung zwischen dem Magnetring 26 und der Spindelmutter 25 parallel zu der Längsmittelachse m in Richtung x1 und x2 verhindern.

In den Fig. 7 und 8 ist offensichtlich, dass die Setzmarken 23, die einen Abdruck der Längsvorsprünge 18 darstellen, in Bezug auf die Zähne der Halteverzahnung 22 kürzer sind, was eine Erstreckung parallel zu der Längsmittelachse m betrifft. Ebenfalls ist erkennbar, dass die Setzmarken 24, die einen Abdruck der Quervorsprünge 19 darstellen, zwischen einem Ende 25 eines Zahns und einem von der Schulterfläche 21 gebildeten Ende des Zahns der Halteverzahnung 22 angeordnet sind.

Die Montage des Magnetrings 26 erfolgt, indem der Magnetring 26 in Richtung x2 (siehe Fig. 3) auf die Spindelmutter 25 aufgeschoben wird. Dabei verformen sich die Zähne zunächst lediglich elastisch und erst langfristig tritt an der Stelle des Sitzes des Magnetrings 26 eine plastische Verformung auf. Ausgehend von dieser plastischen Verformung kann bei extremen Temperaturkonstellationen eine zusätzliche Verformung des weicheren Materials stattfinden, so dass es nicht zu einer Überlastung des Magnetrings 26 kommen kann.

Bei einer Materialschrumpfung aufgrund von geringen Temperaturen kann es andererseits nicht zu einem lösen der Verbindung kommen, weil aufgrund des Zusammenwirkens der Zähne der Halteverzahnung 22 mit den Längsvorsprüngen 18 und den Quervorsprüngen 19 nicht zu einem Lösen des Formschlusses kommen kann.

## Patentansprüche

1. Vorrichtung umfassend ein erstes Bauteil (11) und ein zweites Bauteil (12), wobei das erste Bauteil (11) eine zylindrische Außenfläche (13) und das zweite Bauteil (12) eine zylindrische Innenfläche (17) umfasst, welche auf der Außenfläche (13), koaxial zu einer Längsmittelachse (m) angeordnet ist, wobei dem ersten Bauteil zugeordnete erste Verbindungsflächen mit dem zweiten Bauteil zugeordneten zweiten Verbindungsflächen zusammenwirken, um eine rotatorische Relativbewegung der Bauteile (11, 12) zu verhindern, wobei eine der Verbindungsflächen eine Halteverzahnung (22) bildet und die andere der Verbindungsflächen auf dem Umfang verteilte, voneinander beabstandete Längsvorsprünge (18) bildet, deren Zahnflanken sich parallel zu der Längsmittelachse (m) erstrecken, **dadurch gekennzeichnet, dass** das erste Bauteil( 11) und das zweite Bauteil (12) unterschiedliche Ausdehnungskoeffizienten aufweisen und dass die Längsvorsprünge (18) eine größere Härte aufweisen als die Halteverzahnung (22), derart, dass bei der Montage das weichere Material von dem härteren Material verformt wird, wobei sich die Längsvorsprünge in Bezug auf die Halteverzahnung über eine geringere Länge erstrecken.

2. Vorrichtung nach einem der vorangehenden Ansprüche, **dadurch gekennzeichnet, dass** die Zahnflanken der Halteverzahnung (22) parallel zu der Längsmittelachse (m) verlaufen.

3. Vorrichtung nach einem der vorangehenden Ansprüche, **dadurch gekennzeichnet, dass** auf dem Umfang verteilte, voneinander beabstandete Quervorsprünge (19) ausgebildet sind, die eine axiale Relativbewegung der Teile verhindern.

4. Vorrichtung nach Anspruch 3, **dadurch gekennzeichnet, dass** die Quervorsprünge (19) eine größere Härte aufweisen, als die Halteverzahnung (22).

5. Vorrichtung nach einem der vorangehenden Ansprüche 3 oder 4, **dadurch gekennzeichnet, dass** ein Fußkreisdurchmesser der Halteverzahnung (22) kleiner ist als ein Kopfkreisdurchmesser der Längsvorsprünge (18) und / oder der Quervorsprünge (19).

6. Vorrichtung nach einem der Ansprüche 3 bis 5, **dadurch gekennzeichnet, dass** der Quervorsprung (19) endseitig von dem Längsvorsprung (18) ausgebildet ist.

7. Vorrichtung nach einem der vorangehenden Ansprüche, **dadurch gekennzeichnet, dass** die Halteverzahnung (22) von einem Kunststoff gebildet ist.

8. Vorrichtung nach einem der vorangehenden Ansprüche, **dadurch gekennzeichnet, dass** eine Längsmittelachse (m) jedes Längsvorsprungs in Umfangsrichtung zwischen den Längsmittelachsen von zwei Zähnen der Halteverzahnung angeordnet ist.

9. Vorrichtung nach einem der vorangehenden Ansprüche, **dadurch gekennzeichnet, dass** das erste Bauteil (11) und das zweite Bauteil (12) unterschiedliche Wärmeausdehnungskoeffizienten haben.

## Claims

1. Device comprising a first component (11) and a second component (12), wherein the first component (11) comprises a cylindrical outer surface (13) and the second component (12) comprises a cylindrical inner surface (17) which is disposed on the outer surface (13) coaxially with respect to a longitudinal central axis (m), wherein first connection surfaces associated with the first component interact with second connection surfaces associated with the second component in order to prevent a relative rotational movement of the components (11, 12), wherein one of the connection surfaces forms a retaining toothing (22) and the other connection surface forms mutually spaced longitudinal protrusions (18) which are distributed over the circumference and the tooth flanks of which extend parallel to the longitudinal central axis (m), **characterised in that** the first component (11) and the second component (12) have different coefficients of expansion, and **in that** the longitudinal protrusions (18) have a greater hardness than the retaining toothing (22) such that during assembly, the softer material is deformed by the harder material, wherein the longitudinal protrusions extend over a shorter length in relation to the retaining toothing.

2. Device according to one of the preceding claims, **characterised in that** the tooth flanks of the retaining toothing (22) are parallel to the longitudinal central axis (m).

3. Device according to one of the preceding claims, **characterised in that** mutually spaced transverse protrusions (19) are formed which are distributed over the circumference and prevent axial relative movement of the parts.

4. Device according to claim 3, **characterised in that** the transverse protrusions (19) have a greater hardness than the retaining toothing (22).

5. Device according to one of the preceding claims 3 or 4, **characterised in that** a root diameter of the retaining toothing (22) is smaller than a tip diameter of the longitudinal protrusions (18) and/or of the transverse protrusions (19).

6. Device according to one of claims 3 to 5, **characterised in that** the transverse protrusion (19) is formed on the end of the longitudinal protrusion (18).

7. Device according to one of the preceding claims, **characterised in that** the retaining toothing (22) is made of a plastic material.

8. Device according to one of the preceding claims, **characterised in that** a longitudinal central axis (m) of each longitudinal protrusion is disposed in the circumferential direction between the longitudinal central axes of two teeth of the retaining toothing.

9. Device according to one of the preceding claims, **characterised in that** the first component (11) and the second component (12) have different coefficients of thermal expansion.

## Revendications

1. Dispositif comprenant un premier composant (11) et un deuxième composant (12), dans lequel le premier composant (11) comporte une surface extérieure (13) cylindrique et le deuxième composant (12) une surface intérieure (17) cylindrique qui est disposée sur la surface extérieure (13), de façon coaxiale à son axe médian longitudinal (m), dans lequel des premières surfaces de connexion associées au premier composant interagissent avec des deuxièmes surfaces de connexion associées au deuxième composant pour empêcher un mouvement relatif rotatoire des composants (11, 12), dans lequel une des surfaces de connexion forme une denture de maintien (22) et l'autre des surfaces de connexion forme des saillies longitudinales (18) espacées les unes des autres et réparties sur la périphérie dont les flancs de dent s'étendent parallèlement à l'axe médian longitudinal (m), **caractérisé en ce que** le premier composant (11) et le deuxième composant (12) présentent des coefficients de dilatation différents et que les saillies longitudinales (18) offrent une plus grande dureté que la denture de maintien (22), de sorte que, lors du montage, le matériau plus tendre est déformé par le matériau plus dur, les saillies longitudinales s'étendant sur une longueur plus faible que la denture de maintien.

2. Dispositif selon une des revendications précédentes, **caractérisé en ce que** les flancs de dent de la denture de maintien (22) courent parallèlement à l'axe médian longitudinal (m).

3. Dispositif selon une des revendications précédentes, **caractérisé en ce que** sur la périphérie sont formées des saillies transversales (19) espacées les une des autres qui empêchent un mouvement relatif axial des pièces.

4. Dispositif selon la revendication 3, **caractérisé en ce que** les saillies transversales (19) offrent une plus grande dureté que la denture de maintien (22).

5. Dispositif selon une des revendications précédentes 3 ou 4, **caractérisé en ce qu'**un diamètre circulaire de pied de la denture de maintien (22) est inférieur à un diamètre circulaire de tête des saillies longitudinales (18) et/ou des saillies transversales (19).

6. Dispositif selon une des revendications 3 à 5, **caractérisé en ce que** la saillie transversale (19) est formée du côté extrémité par la saillie longitudinale (18).

7. Dispositif selon une des revendications précédentes, **caractérisé en ce que** la denture de maintien (22) est constituée d'une matière plastique.

8. Dispositif selon une des revendications précédentes, **caractérisé en ce qu'**un axe médian longitudinal (m) de chaque saillie longitudinale est disposé dans la direction périphérique entre les axes médians longitudinaux de deux dents de la denture de maintien.

9. Dispositif selon une des revendications précédentes, **caractérisé en ce que** le premier composant (11) et le deuxième composant (12) ont des coefficients de dilatation thermique différents.
